# EUROPÄISCHE PATENTSCHRIFT

(11) **EP 0 756 103 B1**
(45) Veröffentlichungstag und Bekanntmachung des Hinweises auf die Patenterteilung: **06.10.1999**
(21) Anmeldenummer: 96111243.0
(22) Anmeldetag: 12.07.1996
(51) Int. Cl.: F16F 15/00, F16F 1/36, F16F 15/03

(54) **Schnittstelle für die Schwingungsreduktion in strukturdynamischen Systemen**
Interface apparatus for vibration damping in structural dynamic systems
Dispositif d'interface pour amortissement des vibrations en systèmes structurels dynamiques

(30) Priorität: 27.07.1995 DE 19527514
(43) Veröffentlichungstag der Anmeldung: 29.01.1997
(73) Patentinhaber: Deutsches Zentrum für Luft- und Raumfahrt e.V, 53127 Bonn (DE)
(72) Erfinder: Breitbach, Elmar, Prof. Dr., 37075 Göttingen (DE)
(74) Vertreter: Patentanwälte Rehberg + Hüppe

(56) Entgegenhaltungen:
- EP-A- 0 321 897
- EP-A- 0 472 046
- DE-A- 4 142 885
- GB-A- 2 205 921
- GB-A- 2 222 657
- GB-A- 2 229 789
- GB-A- 2 272 524
- US-A- 4 848 525
- PATENT ABSTRACTS OF JAPAN vol. 014, no. 033 (M-923), 22.Januar 1990 & JP 01 269736 A (MITSUBISHI HEAVY IND LTD), 27.Oktober 1989,
- PATENT ABSTRACTS OF JAPAN vol. 013, no. 385 (M-864), 25.August 1989 & JP 01 135943 A (HITACHI PLANT ENG & CONSTR CO LTD), 29.Mai 1989,

## Beschreibung

Die Erfindung bezieht sich auf eine Schnittstellenanordnung für die Schwingungsreduktion in strukturdynamischen Systemen, mit einem basisseitigen und einem strukturseitigen Bauteil und mit mindestens einem eine Hauptrichtung aufweisenden Aktuator, beispielsweise einem piezoelektrischen oder einem magnetostriktiven Aktuator, dessen Erstreckung in der Hauptrichtung zwischen einem ersten Angriffspunkt an dem basisseitigen Bauteil und einem zweiten Angriffspunkt an dem strukturseitigen Bauteil durch ein Ansteuersignal kontrolliert veränderbar ist, wobei der Aktuator zwischen dem ersten und dem zweiten Angriffspunkt unter Druckvorspannung steht.

Eine derartige Anordnung ist aus der DE-A-4 142 885 bekannt.

Als piezoelektrische Aktuatoren kommen insbesondere Piezopolymere und Piezokeramiken in Frage. Als magnetostriktive Aktuatoren sind insbesondere Legierungen seltener Erden geeignet. Daneben können bei der Schnittstelle auch elektrostriktive Keramiken, strukturveränderliche Legierungen und Polimere, elektro-reologische Flüssigkeiten, magneto-reologische Flüssigkeiten und dgl. Verwendung finden. Entscheidend ist nur, daß die Erstreckung des Aktuators zwischen den beiden Angriffspunkten durch das Ansteuersignal kontrolliert veränderbar ist. Dabei schließt die Veränderung der Erstreckung eine Veränderung der Kraft ein, mit der der Aktuator in den Angriffspunkten angreift, auch wenn diese Veränderung der Kraft mit keiner auffälligen Veränderung der Erstreckung zwischen den Angriffspunkten einhergeht.

Eine Schnittstellenanordnung der eingangs beschriebenen Art wird zwischen einer Basis und einer schwingungsfähigen Struktur angeordnet, um den durch Schwingungen der Basis in der Struktur erzeugten dynamischen elastischen Verformen gezielt entgegenzuwirken und diese auf dem Wege der Interferenz möglichst weitgehend auszulöschen. Daneben können auch auf anderem Wege angeregte Schwingungen der Struktur auf dem Wege der Interferenz ausgelöscht werden. Um die in der Struktur induzierten Schwingungen und die Schwingungen der Basis zu registrieren, ist eine Mehrzahl von Sensoren vorzusehen. Das Signal dieser Sensoren wird in einer Regelung verarbeitet, um das Ansteuersignal für die Aktuatoren zu generieren. Im Idealfall erzeugt der Aktuator eine dynamische Deformation der Struktur, die sich gegenphasig zur ursprünglichen, unbeeinflußten Deformation verhält, quasi im Sinne einer vollkommenden Spiegelung an der Zeitachse. Als geeignete Regelungen kommen dabei vorwiegend adaptive Elektroniken in Frage, die sich an die aktuellen Gegebenheiten der Basis und der schwingenden Struktur sowie weitere Einflüsse anpassen.

Konkrete Anwendungen sind beispielsweise die schwingungsfreie Lagerung eines Satelliten in einer startenden Rakete, die Unterbindung der Schwingungsübertragung des Flugzeugsrumpfs auf ein Leitwerk oder die Flügel eines Flugzeugs und dgl. Bei den genannten Anwendungen ist ein besonderes Anfordernis an die Schnittstelle, daß sie sich durch ein möglichst geringes Gewicht auszeichnet.

Ein besonderes Problem bei den Schnittstellenanordnung der eingangs beschriebenen Art besteht darin, daß der Aktuator einer erheblichen mechanischen Belastung ausgesetzt ist. Dies gilt nicht nur in der Hauptrichtung, in der Belastungen auf Druck und Zug auftreten, sondern auch quer dazu, wo Belastungen auf Schub und Scherung auftreten. Insbesondere die derzeit üblichen Aktuatoren, d. h. piezoelektrische und magnetostriktive Aktuatoren, weisen jedoch nur eine geringe Schub- und Scherfestigkeit auf. Auch ihre Zugfestigkeit in der Hauptrichtung ist nur gering. Einzig ihre Druckfestigkeit ist ausreichend groß, um erheblichen mechanischen Belastungen standzuhalten.

Der Erfindung liegt die Aufgabe zugrunde, eine Schnittstellenanordnung der eingangs beschriebenen Art aufzuzeigen, bei der eine mechanische Überbelastung der eingesetzten Aktuatoren auch bei hoher Belastung der Schnittstelle zuverlässig vermieden wird. Weiterhin soll sich die Schnittstellenanordnung durch einen einfachen Aufbau auszeichnen, der seinerseits in einen geringen Raumbedarf und ein geringes Gewicht resultiert.

Erfindungsgemäß wird die Aufgabe dadurch gelöst, daß dem Aktuator zwischen dem basisseitigen und dem strukturseitigen Bauteilen mindestens ein elastisches Element parallel geschaltet ist, das eine möglichst geringe Längssteifigkeit parallel zu der Hauptrichtung des Aktuators und eine möglichst hohe Quersteifigkeit quer zu der Hauptrichtung des Aktuators aufweist. Durch die Druckvorspannung auf den Aktuator, bei der es sich um eine elastische Vorspannung handelt, wird sichergestellt, daß der Aktuator keinerlei Zugbelastung ausgesetzt wird. Hieraus ergibt sich für die Abstimmung der Vorspannkraft, daß sie mindestens denselben Betrag aufweisen muß, wie die maximal zwischen den Angriffspunkten des Aktuators auf die Schnittstelle einwirkenden Zugkräfte. Vorzugsweise ist die Vorspannkraft jedoch noch größer, um eine Sicherheitsreserve bereitzustellen.

Schub- und Scherbelastungen des Aktuators werden durch das dem Aktuator parallel geschaltete elastische Element vermieden bzw. soweit reduziert, daß die zulässigen Belastungen des Aktuators nicht überschritten werden. Hierfür sorgt die hohe Quersteifigkeit des elastischen Elements quer zu der Haupterstreckungsrichtung des Aktuators. Hingegen ist die Längssteifigkeit des elastischen Elements parallel zu der Hauptrichtung vorzugsweise gering, um einen möglichst geringen Einfluß auf die Veränderungen der Erstreckung des Aktuators aufgrund des Ansteuersignals auszuüben. Die verbleibende Längssteifigkeit des elastischen Elements ist auch bei der Abstimmung der absoluten Vorspannkraft zwischen den basisseitigen und dem strukturseitigen Bauteil zu berücksichtigen.

Die Druckvorspannung des Aktuators kann durch eine oder mehrere dem Aktuator parallel geschaltete Dehnschrauben aufgebracht werden. Dabei ist die Längssteifigkeit der Dehnschrauben in Richtung der Hauptrichtung des Aktuators, d. h. ihre Federkonstante möglichst gering zu wählen, um eine gezielte Veränderung der Erstreckung des Aktuators aufgrund des Ansteuersignals zu ermöglichen.

Das dem Aktuator parallel geschaltete elastische Element ist vorzugsweise rohrförmig ausgebildet, wobei es eine Rohrachse aufweist. Die Bezeichnung rohrförmig bezeichnet dabei insbesondere eine Rohrform mit kreisförmigem Querschnitt, da entsprechende Rohre bekanntermaßen eine besonders hohe Steifigkeit quer zu ihrer Rohrachse aufweisen. Es sind aber auch andere Querschnittsformen möglich. Ebenso ist kein entlang der Rohrachse konstanter Durchnmesser des Rohrs erforderlich.

Die gewünschte geringe Längssteifigkeit des rohrförmigen Elements ist beispielsweise mit zwei teleskopisch angeordneten und elastisch aneinander abgestützten Rohrabschnitten zu erreichen. Ebenso kann ein einziger Rohrabschnitt teleskopisch an einem Bauteil der Schnittstelle geführt und elastisch an diesem Bauteil abgestützt sein. Insbesondere aus Gewichtsgesichtspunkten ist es jedoch bevorzugt, wenn die gewünschten Elastizitäten des rohrförmigen elastischen Elements durch in der Wandung des rohrförmigen Elements angeordnete Fasern, Fäden oder Drähte bestimmt werden. Bei den Fasern kann es sich beispielsweise um Glas- oder Kohlefasern handeln, bei den Fäden um Metall- oder textile Fäden und bei den Drähten um Metalldrähte.

Die gewünschte Quersteifigkeit des elastischen Elements wird besonders gefördert, wenn die Fasern, Fäden oder Drähte zu zwei gleichen Teilen in gegenläufigen Richtungen spiralförmig um die Rohrachse des elastischen Elements angeordnet sind. Dabei ist die Anordnung zu gleichen Teilen in gegenläufigen Richtungen wichtig, um keine Vorzugsdrehrichtung um die Rohrachse auszuzeichnen, mit der zwangsläufig unerwünschte Eigenschaften der Schnittstelle verbunden wären. Für die spiralförmige Anordnung um die Rohrachse sind insbesondere vergleichsweise steife Fasern, wie beispielsweise hochsteife Kohlefasern, oder Drähte geeignet.

Der Steigungswinkel der spiralförmig angeordneten Fasern, Fäden oder Drähte relativ zu der Rohrachse des elastischen Elements beträgt vorzugsweise etwa 45 Grad. Dabei bedeutet etwa 45 Grad den Bereich von 30 bis 60 Grad. Bei deutlich darüber und darunter liegenden Steigungswinkeln ergeben sich negative Einflüsse auf die Längssteifigkeit des elastischen Elements im Sinne einer unerwünschten Erhöhung.

Die Fasern, Fäden oder Drähte können zu einem dritten Teil parallel zu der Rohrachse des elastischen Elements angeordnet sein, wobei die parallel angeordneten Fasern, Fäden oder Drähte weniger steif ausgebildet sind als die spiralförmig angeordneten Fasern, Fäden oder Drähte. Für die Anordnung parallel zu der Rohrachse sind insbesondere weniger steife Fasern, z. B. Glasfasern und vor allem Fäden gut geeignet, die sich durch hohe Dehnfähigkeit bei ausreichender Zugfestigkeit, aber geringe Drucksteifigkeit auszeichnen. Es versteht sich, daß das elastische Element insgesamt nicht nur entweder Fasern, Fäden oder Drähte aufweisen kann, sondern daß es auch Anwendungen gibt, in denen gerade eine Kombination von Fasern und/oder Fäden und/oder Drähten besondere Vorteile aufweist.

Insbesondere wenn das rohrförmige elastische Element Fasern zur Bestimmung seiner Elastizitäten aufweist, sind diese Fasern in eine formgebende Matrix eingebettet. Auch die Einbettung der Fäden oder Drähten eine formgebende Matrix des rohrförmigen elastischen Elements ist in der Regel sinnvoll. Eine geeignete Matrix besteht beispielsweise aus einem isomorphen Kunstharz.

Zur vollen Ausnutzung des elastischen Elements und zur quasikoachsialen Anordnung des elastischen Elements und des Aktuators ist vorzugsweise eine Mehrzahl von Aktuatoren ringförmig um das elastische Element angeordnet. Bei einem rohrförmigen elastischen Element kann auch stattdessen oder zusätzlich ein Aktuator oder eine Mehrzahl von Aktuatoren ringförmig in dem elastischen Element angeordnet sein. Umgekehrt ist auch denkbar, eine Mehrzahl von elastischen Elementen ringförmig um einen Aktuator anzuordnen und eventuell darum einen weiteren Ring von Aktuatoren vorzusehen. Entscheidend bei allen diesen Anordnungen ist, daß die parallele Anordnung der Aktuatoren und der elastischen Elemente zu keinen ungewollten Kippmomenten zwischen der Basis und der Struktur führt, wenn alle Aktuatoren gleichzeitig und gleichsinnig auf ein entsprechendes Ansteuersignal hin ihre Erstreckung in ihren Hauptrichtungen ändern.

Gleichzeitig ermöglicht eine ringförmige Anordnung einer Mehrzahl von Aktuatoren immer eine gezielte Verkippung der Struktur gegenüber der Basis um eine beliebige senkrecht zu der Symmetrieachse der Anordnung verlaufende Achse. Hierzu sind die Aktuatoren auf nur einer Seite dieser Achse zwecks einer Vergrößerung der Erstreckung in ihrer Hauptrichtung anzusteuern. Die damit einhergehende asymmetrische Belastung der Aktuatoren ist bei einem ausgewogenen Verhältnis des Kippwinkels zu dem Durchmesser der ringförmigen Anordnung vernachlässigbar.

Die beliebige Ausrichtung der Achse, um die die Verkippung der Struktur gegenüber der Basis bewirkt wird, schließt eine zeitlich veränderliche, d.h. auch eine periodisch umlaufende, Achse ein. Bei einer solchen umlaufenden Achse ist die Schnittstelle mit einer Taumelscheibenanordnung vergleichbar.

In einer bevorzugten konkreten Ausführungsform der Schnittstellenanordnung sind das basisseitige und das strukturseitige Bauteil als Rohrflansche ausgebildet, wobei die Rohrflansche durch eine Mehrzahl der ringförmig angordneten Dehnschrauben miteinander verbunden sind und wobei für das rohrförmige elastische Element an jedem Rohrflansch eine Führung vorgesehen ist, die zumindest eine radiale Oberfläche des rohrförmigen elastischen Elements spielfrei abstützt.

Die Erfindung wird im folgenden anhand eines Ausführungsbeispiels näher erläutert und beschrieben. Dabei zeigt
- Figur 1: schematisch die Anwendung der Schnittstelle,
- Figur 2: die Schnittstelle im Längsschnitt,
- Figur 3: die Schnittstelle im Querschnitt und
- Figur 4: ein Detail des elastischen Elements der Schnittstelle.

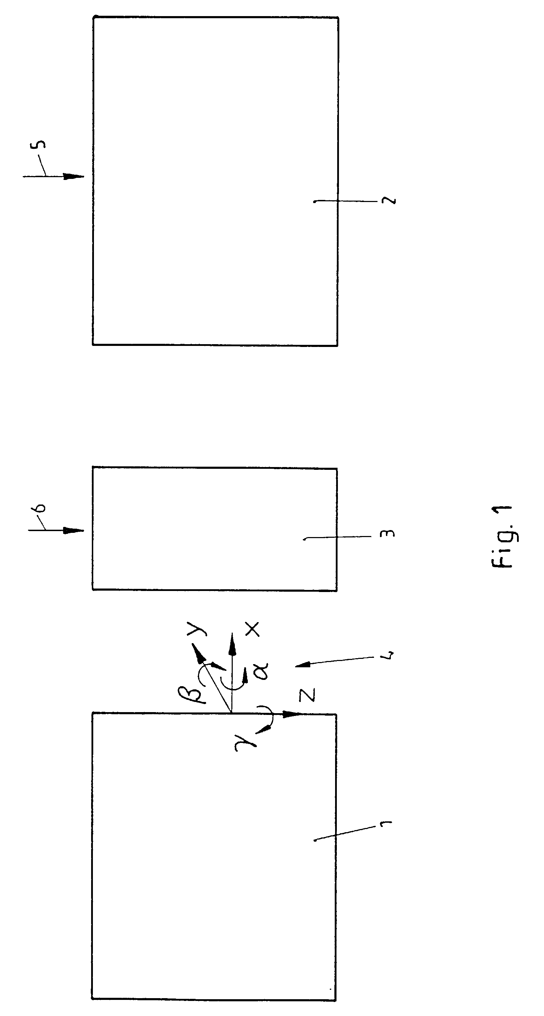

In Figur 1 sind eine Basis 1 und eine Struktur 2 wiedergegeben, zwischen denen eine Schnittstelle 3 angeordnet ist. Von der Basis 1 werden Schwingungen 4 auf die Struktur 2 übertragen. Die Schwingungen erfolgen in den translatorischen Richtungen x, y und z und der rotatorischen Richtungen α, β und τ. Zusätzlich wirken Störungen 5 direkt auf die Struktur 2 ein. Um sowohl die von der Basis 1 auf die Struktur 2 übertragenen Schwingungen 4 als auch die Störungen 5 im Wege der Interferenz möglichst weitgehend auszulöschen, ist die Schnittstelle 3 vorgesehen, die an der Basis 1 und der Struktur 2 angreift und die die induzierten Schwingungen 4 und Störungen 5 mit dynamischen Verformungen der Struktur 2 kompensierend destruktiv überlagert. Zur Ansteuerung der Schnittstelle 3 ist ein Ansteuersignal 6 vorgesehen. Das Ansteuersignal 6 wird von einer vorzugsweise adaptiven Regeleinrichtung generiert, die eingangsseitig von Ausgangssignalen von Sensoren beaufschlagt wird, die ihrerseits vorzugsweise sowohl an der Basis 1 als auch an der Struktur 2 angeordnet sind. Die Sensoren sind hier ebenso wie die adaptive Regeleinrichtung nicht dargestellt.

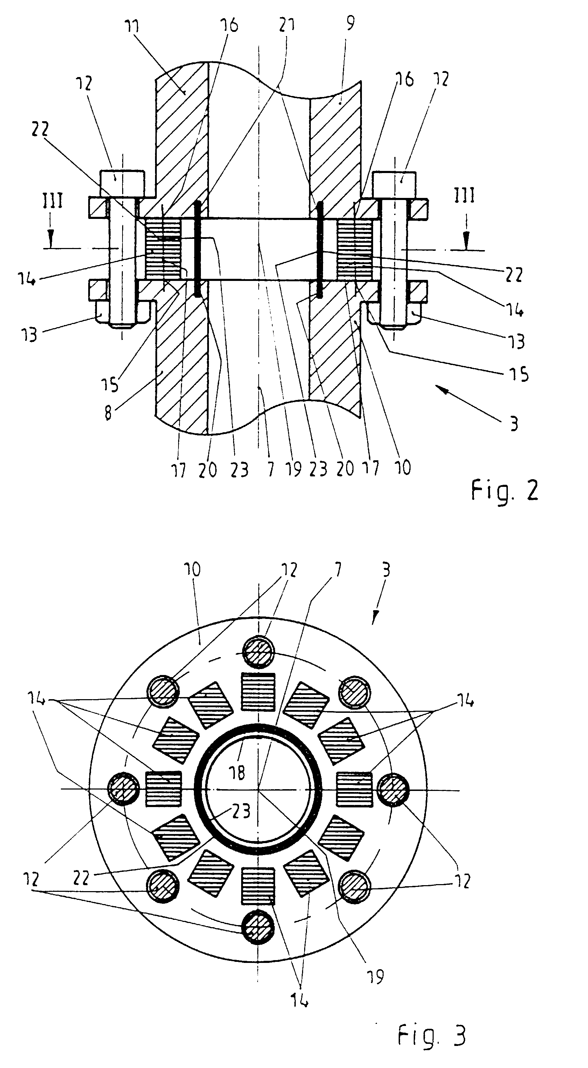

Die Figuren 2 und 3 zeigen den Aufbau der Schnittstelle 3. Hierbei handelt es sich jedoch nicht um eine universelle Schnittstelle, die dynamische Deformationen der Struktur in allen Richtungen x, y und z sowie α, β und τ hervorrufen kann. Vielmehr sind die dynamischen Verformungen aufgrund der Schnittstelle 3 gemäß den Figuren 2 und 3 auf eine translatorische Richtung, die hier als Hauptrichtung 7 bezeichnet wird, und zwei rotatorische Richtungen, denen hier eine Nickachse und eine Gierachse als Drehachsen zugeordnet sind, beschränkt. Die Schnittstelle 3 weist ein basisseitiges Bauteil 8 und ein strukturseitiges Bauteil 9 auf. Beide Bauteile 8, 9 sind als Rohrflansche 10, 11 ausgebildet. Die Rohrflansche 10, 11 sind durch Dehnschrauben 12 und Muttern 13 miteinander verbunden. Dabei sind die Dehnschrauben 12 ringförmig um die Hauptrichtung 7 angeordnet. Zwischen den Rohrflanschen 10 und 11 ist eine Mehrzahl von Aktuatoren 14 angeordnet. Die Anordnung ist wiederum ringförmig um die Hauptrichtung 7. Die Aktuatoren 14 greifen jeweils an Angriffspunkten 15 und 16 an dem basisseitigen Bauteil 8 und dem strukturseitigen Bauteil 9 an. Die Angriffspunkte 15 und 16 liegen auf Hauptrichtungen 17 der einzelnen Aktuatoren 14. Die Hauptrichtungen 17 sind die Richtungen, in denen sich die Erstreckung der Aktuatoren 14 aufgrund des Ansteuersignals 6 verändert. Im Mittel fallen die Hauptrichtungen 17 mit der Hauptrichtung 7 der Schnittstelle 3 zusammen. Innerhalb des Rings der Aktuatoren 14 ist ein elastisches Element 18 vorgesehen. Das elastische Element 18 ist zwischen dem basisseitigen Bauteil 8 und dem strukturseitigen Bauteil 9 parallel zu den Aktuatoren 14 angeordnet. Das elastische Element 18 ist rohrförmig ausgebildet und weist eine Rohrachse 19 auf, die mit der Hauptrichtung 7 zusammenfällt. Das elastische Element 18 zeichnet sich durch eine hohe Quersteifigkeit senkrecht zu der Rohrachse 19 und eine geringe Längssteifigkeit in Richtung der Rohrachse 19 aus. Für das elastische Element 18 sind an den Rohrflanschen 10 und 11 Führungen 20 und 21 vorgesehen, die die radialen Oberflächen 22 und 23 des elastischen Elements 18 spielfrei abstützen. Auf diese Weise wird weitesgehend verhindert, daß Kräfte quer zu den Hauptrichtungen 17 auf die Aktuatoren 14 einwirken und zu einer Schub- oder Scherbelastung führen. Gleichzeitig verhindert eine mit den Dehnschrauben 12 aufgebrachte Druckvorspannung auf die Aktuatoren 14, daß diese auf Zug beansprucht werden. Damit verbleibt ausschließlich eine unschädliche Druckbelastung der Aktuatoren 14. Übliche Aktuatoren, wie piezoelektrische oder magnetostriktive Aktuatoren sind sehr druckstabil.

Bei gleichzeitiger und gleichsinniger Ansteuerung aller Aktuatoren 14 zur Veränderung ihrer Erstreckung in ihren Hauptrichtungen 17 kommt es zwischen dem basisseitigen Bauteil 8 und dem strukturseitigen Bauteil 9 zu einer translatorischen Relativbewegung in der Hauptrichtung 7. Bei gleichzeitiger, aber gegensinniger Ansteuerung der Aktuatoren 14 auf den beiden Seiten der Nickachse 27 oder der Gierachse 28 oder bei Ansteuerung von Aktuatoren 14 auf nur einer Seite dieser Achsen kommt es hingegen zu einer rotatorischen Relativbewegung zwischen dem basisseitigen Bauteil 8 und dem strukturseitigen Bauteil 9 um die Nickachse 27 bzw. die Gierachse 28. Durch Überlagerung von rotatorischen Relativbewegungen sowohl um die Nickachse 27 als auch um die Gierachse 28 können rotatorische Relativbewegungen um beliebige in der von der Nickachse 27 und der Gierachse 28 aufgespannten Ebene und senkrecht zu der Hauptrichtung 7 verlaufende Drehachsen verwirklicht werden. Dabei sind auch zeilich veränderliche, d.h. beispielsweise periodisch umlaufende, Drehachsen möglich.

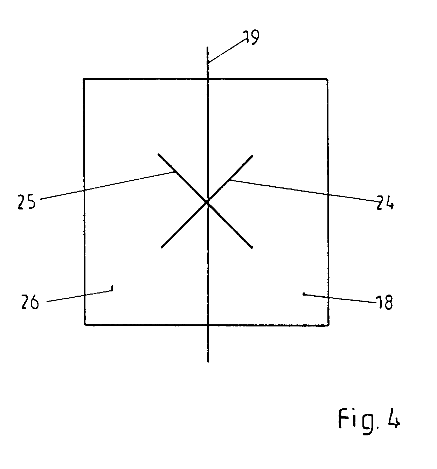

Die gewünschten Elastizitäten des elastischen Elements 18 längs und quer der Rohrachse 19 werden durch Fasern 24, 25 bestimmt, die in einer beispielsweise aus Kunstharz besehenden formgebenden Matrix 26 des elastischen Elements 18 eingebettet sind. Dies ist in Figur 4 skizziert. Dabei sind zwei Fasern 24 und 25 schematisch wiedergegeben, die für zwei gleich große Anteile der Fasern stehen, die in entgegengesetzten Richtungen spiralförmig um die Rohrachse 19 angeordnet sind. Dabei beträgt die Steigung der Fasern 24 und 25 zu der Rohrachse 19 jeweils 45 Grad. Bei den Fasern handelt es sich um hochsteife Kohlefasern, die die gewünschte hohe Quersteifigkeit des elastischen Elements 18 bewirken. Gleichzeitig verhindert die spiralförmige Anordnung der Fasern 24 und 25 das Entstehen einer unerwünscht hohen Längssteifingkeit in Richtung der Rohrachse 19. Parallel zu dieser Richtung kann zwar ein dritter Anteil Fasern angeordnet sein. Es sind dann jedoch weniger steife Fasern beispielsweise Glasfasern auszuwählen. Eine andere Möglichkeit besteht darin, in Richtung der Längsachse 19 Fäden in die Matrix 26 einzubetten, die dehnfähig und zugfest sind, aber keine Drucksteifigkeit aufweisen. Neben Fasern und Fäden können auch Drähte in geeigneter Weise in die Matrix eingebettet werden, um die gewünschten unterschiedlichen Steifigkeiten des elastischen Elements 18 in Richtung der Rohrachse 19 und quer zu dieser zu erreichen.

### BEZUGSZEICHENLISTE

- 1 -: Basis
- 2 -: Struktur
- 3 -: Schnittstelle
- 4 -: Schwingungen
- 5 -: Störungen
- 6 -: Ansteuersignal
- 7 -: Hauptrichtung
- 8 -: basisseitiges Bauteil
- 9 -: strukturseitiges Bauteil
- 10 -: Rohrflansch

- 11 -: Rohrflansch
- 12 -: Dehnschraube
- 13 -: Mutter
- 14 -: Aktuator
- 15 -: Angriffspunkt
- 16 -: Angriffspunkt
- 17 -: Hauptrichtung
- 18 -: elastisches Element
- 19 -: Rohrachse
- 20 -: Führung

- 21 -: Führung
- 22 -: Oberfläche
- 23 -: Oberfläche
- 24 -: Faser
- 25 -: Faser
- 26 -: Matrix

## Patentansprüche

1. Schnittstellenanordnung für die Schwingungsreduktion in strukturdynamischen Systemen, mit einem basisseitigen und einem strukturseitigen Bauteil (8, 9) und mit mindestens einem eine Hauptrichtung aufweisenden Aktuator (14), beispielsweise einem piezoelektrischen oder einem magnetostriktiven Aktuator, dessen Erstreckung in der Hauptrichtung zwischen einem ersten Angriffspunkt (15) an dem basisseitigen Bauteil (8) und einem zweiten Angriffspunkt (16) an dem strukturseitigen Bauteil (9) durch ein Ansteuersignal kontrolliert veränderbar ist, wobei der Aktuator (14) zwischen dem ersten Angriffspunkt (15) und dem zweiten Angriffspunkt (16) unter Druckvorspannung steht, **dadurch gekennzeichnet,** daß dem Aktuator (14) zwischen dem basisseitigen Bauteil (8) und dem strukturseitigen Bauteil (9) mindestens ein elastisches Element (18) parallel geschaltet ist, das eine möglichst geringe Längssteifigkeit parallel zu der Hauptrichtung (17) des Aktuators (14) und eine möglichst hohe Quersteifigkeit quer zu der Hauptrichtung (17) des Aktuators (14) aufweist.

2. Anordnung nach Anspruch 1, **dadurch gekennzeichnet**, daß die Vorspannung des Aktuators (14) durch mindestens eine dem Aktuator (14) parallel geschaltete Dehnschraube (12) aufgebracht wird.

3. Anordnung nach Anspruch 1 oder 2, **dadurch gekennzeichnet,** daß das elastische Element (18) rohrförmig ausgebildet ist und eine Rohrachse (19) aufweist.

4. Anordnung nach Anspruch 3, **dadurch gekennzeichnet,** daß die Elastizitäten des rohrförmigen elastischen Elements (18) durch in der Wandung des rohrförmigen Elements (18) angeordnete Fasern (24, 25), Fäden oder Drähte bestimmt werden.

5. Anordnung nach Anspruch 4, **dadurch gekennzeichnet**, daß die Fasern (24, 25), Fäden oder Drähte zu zwei gleichen Teilen in gegenläufigen Richtungen spiralförmig um die Rohrachse (19) des elastischen Elements (18) angeordnet sind.

6. Anordnung nach Anspruch 5, **dadurch gekennzeichnet**, daß der Steigungswinkel der spiralförmig angeordneten Fasern (24, 25), Fäden oder Drähte relativ zu der Rohrachse (19) des elastischen Elements (18) etwa 45° beträgt.

7. Anordnung nach Anspruch 5 oder 6, **dadurch gekennzeichnet**, daß die Fasern (24, 25), Fäden oder Drähte zu einem dritten Teil parallel zu der Rohrachse (19) des elastischen Elements (18) angeordnet sind, wobei die parallel angeordneten Fasern, Fäden oder Drähte weniger steif ausgebildet sind als die spiralförmig angeordneten Fasern (24, 25), Fäden oder Drähte.

8. Anordnung nach einem der Ansprüche 4 bis 7, **dadurch gekennzeichnet**, daß die Wandung des rohrförmigen elastischen Elements (18) eine formgebende Matrix (26) aufweist, in die die Fasern (24, 25), Fäden oder Drähte eingebettet sind.

9. Anordnung nach einem der Ansprüche 1 bis 8, **dadurch gekennzeichnet**, daß eine Mehrzahl von Aktuatoren (14) ringförmig um das elastische Element (18) angeordnet sind.

10. Anordnung nach den Ansprüchen 2, 3 und 9, **dadurch gekennzeichnet**, daß das basisseitige Bauteil (8) und das strukturseitige Bauteil (9) als Rohrflansche (10 und 11) ausgebildet sind, wobei die Rohrflansche (10, 11) durch eine Mehrzahl der ringförmig angeordneten Dehnschrauben (12) miteinander verbunden sind und wobei für das rohrförmige elastische Element (18) an jedem Rohrflansch (10 bzw. 11) eine Führung (20 bzw. 21) vorgesehen ist, die zumindest eine radiale Oberfläche (22 oder 23) des rohrförmigen elastischen Elements (18) spielfrei abstützt.

## Claims

1. An interface apparatus for vibration reduction in structural-dynamic systems, the apparatus comprising a base-side construction element (8) and a structure-side construction element (9) and at least one actuator (14) having a main direction, for example a piezo-electric or a magneto-strictive actuator, the extension of the actuator in its main direction between a first engagement point (15) at the base-side construction element (8) and a second engagement point (16) at the structure-side construction element (9) being purposefully changeable by means of a drive signal, the actuator (14) being under pressure prestress between the first engagement point (15) and the second engagement point (16), **characterized** in that at least one elastic element (18) is arranged in parallel to the actuator (14) between the base-side construction element (8) and the structure-side construction element (9), the elastic element (18) having a longitudinal stiffness parallel to the main direction (17) of the actuator (14) which is as low as possible, and a transversal stiffness perpendicular to the main direction (17) of the actuator (14) which is as high as possible.

2. An apparatus according to claim 1, **characterized** in that the prestress on the actuator (14) is applied by at least one antifatigue bolt (12) arranged in parallel to the actuator (14).

3. An apparatus according to claim 1 or 2, **characterized** in that the elastic element (18) is of tubular shape and has a tubular axis (19).

4. An apparatus according to claim 3, **characterized** in that the elasticities of the tubular shaped elastic element (18) are determined by fibres (24, 25), threads or wires arranged in the wall of the tubular shaped element (18).

5. An apparatus according to claim 4, **characterized** in that two equal shares of the fibres (24, 25), threads or wires are, in opposite directions, spirally arranged around the tubular axis (19) of the elastic element (18).

6. An apparatus according to claim 5, **characterized** in that the helix angle of the spirally arranged fibres (24, 25), threads or wires is about 45 ° relative to the tubular axis (19) of the elastic element (18).

7. An apparatus according to claim 5 or 6, **characterized** in that a third share of the fibres (24, 25), threads or wires is arranged in parallel to the tubular axis (19) of the elastic element (18), wherein the fibres, threads or wires arranged in parallel are less stiff than the fibres (14, 25), threads or wires spirally arranged.

8. An apparatus according to one of the claims 4 to 7, **characterized** in that the wall of the tubular elastic element (18) comprises a shape-giving matrix (16) in which the fibres (24, 25), threads or wires are embedded.

9. An apparatus according to one of the claims 1 to 8, **characterized** in that a plurality of actuators (14) is arranged like a ring around the elastic element (18).

10. An apparatus according to one the claims 2, 3 and 8, **characterized** in that the base-side construction element (8) and the structure-side construction element (9) are tube flanges (10 and 11), the tube flanges (10, 11) being connected with each other by a plurality of antifatigue bolts (12) arranged ring-like, and a guiding (20 or 21) being provided for the tubular elastic element (18) at each tube flange (10 or 11), the guiding (20 or 21) supporting at least one radial surface (22 or 23) of the tubular elastic element (18) without backlash.

## Revendications

1. Dispositif d'interface destiné à l'amortissement de vibrations dans des systèmes structurels dynamiques, avec un élément de construction côté base et un élément de construction côté structure (8,9), et avec au moins un actuateur (14) présentant une direction principale, par exemple un actuateur piézoélectrique ou magnétostrictif, dont l'extension dans la direction principale, entre un premier point d'attaque (15) situé sur l'élément de construction côté base (8) et un deuxième point d'attaque (16) situe sur l'élément de construction côté structure (9), peut être modifiée sous contrôle d'un signai de commande, et où l'actuateur (14) est soumis à une précontrainte entre le premier point d'attaque (15) et le deuxième point d'attaque (16), dispositif **caractérisé en ce qu**'il est placé, entre l'élément de construction côté base (8) et l'élément de construction côté structure (9), parallèlement à l'actuateur (14), au moins un élément élastique (18), qui possède une rigidité longitudinale, parallèlement à la direction principale (17), aussi faible que possible et une rigidité transversale, transversalement à la direction principale (17) de l'actuateur (14), aussi élevée que possible.

2. Dispositif suivant la revendication 1 **caractérisé en ce que** la précontrainte de l'actuateur (14) est réalisée au moyen d'au moins une vis extensible (12) parallèle à l'actuateur.

3. Dispositif suivant l'une quelconque des revendication i ou 2, **caractérisé en ce que** l'élément élastique (18) est de forme tubulaire et présente un axe de tube (19).

4. Dispositif suivant la revendication 3, **caractérisé en ce que** les élasticités de l'élément élastique tubulaire (18) sont déterminées par des fibres (24, 25) ou des fils textiles ou métalliques disposés dans la paroi de l'élément tubulaire (18).

5. Dispositif suivant la revendication 4, **caractérisé en ce que** les fibres (24, 25) ou les fils textiles ou métalliques sont, pour deux parts égales, disposés en spirales de directions opposées autour de l'axe de tube (19) de l'élément élastique (18).

6. Dispositif suivant la revendication 5, **caractérisé en ce que** la pente des fibres (24, 25) ou fils textiles ou métalliques disposés en spirales est, par rapport à l'axe de tube (19) de l'élément élastique (18), d'environ 45°.

7. Dispositif suivant l'une quelconque des revendication 5 ou 6, **caractérisé en ce que** les fibres (24, 25) ou les fils textiles ou métalliques sont disposés, pour une troisième part, parallèlement à l'axe de tube (19) de l'élément élastique (18) où les fibres (24, 25) ou les fils textiles ou métalliques disposés parallèlement sont moins rigides que les fibres (24, 25) ou les fils textiles ou métalliques disposés en spirales.

8. Dispositif suivant l'une quelconque des revendication 4 à 7, **caractérisé en ce que** la paroi de l'élément élastique tubulaire (18) présente une matrice de moulage (26) dans laquelle sont incorporés les fibres (24, 25) ou les fils textiles ou métalliques.

9. Dispositif suivant l'une quelconque des revendication 1 à 8, **caractérisé en ce que** plusieurs actuateurs (14) sont disposés en cercle autour de l'élément élastique (18).

10. Dispositif suivant les revendication 2, 3 et 9, **caractérisé en ce que** l'élément de construction côté base (8) et l'élément de construction côté structure (9) sont conçus en forme de collets de tube (10, 11) où les collets de tube (10, 11) sont réunis au moyen de plusieurs des vis extensibles (12) disposées en cercle et où il est prévu sur chaque collet (10 ou 11) un guidage (20 ou 21) pour l'élément élastique (18), guidage qui soutient sans jeu au moins une surface radiale (22 ou 23) de l'élément élastique tubulaire (18).
